# EUROPÄISCHE PATENTSCHRIFT

(11) **EP 0 888 909 B1**
(45) Veröffentlichungstag und Bekanntmachung des Hinweises auf die Patenterteilung: **08.10.2003**
(21) Anmeldenummer: 98111226.1
(22) Anmeldetag: 18.06.1998
(51) Int. Cl.: B60B 3/14, B60B 3/16

(54) **Scheibenförmiger Nabenadapter**
Disc like hub adapter
Adapteur de moyeu en forme de disque

(30) Priorität: 30.06.1997 DE 29711384 U
(43) Veröffentlichungstag der Anmeldung: 07.01.1999
(73) Patentinhaber: Höffken, Rüdiger, D-58439 Attendorn (DE)
(72) Erfinder: Höffken, Rüdiger, D-58439 Attendorn (DE)
(74) Vertreter: Kern, Wolfgang, Dipl.-Ing.

(56) Entgegenhaltungen:
- EP-A- 0 641 677
- EP-A- 0 703 100
- DE-A- 4 215 072
- US-A- 5 454 628

## Beschreibung

Die Erfindung betrifft einen scheibenförmigen Nabenadapter für einen Lochkreis zur Aufnahme von Radbefestigungsschrauben aufweisenden Radfelgen von Straßenfahrzeugen, der einerseits in einer Ausnehmung der Radfelge formschlüssig und zentrisch und andererseits mit seiner Mittenbohrung auf der Achsnabe des Fahrzeugs zentrisch anordbar ist, um das Fahrzeug an gewünschte Spurweiten und Einpresstiefen der Radfelgen anzupassen, wobei die Mittenbohrung des Nabenadapters einen zentrischen Nabenführungsring aufweist, dessen kleinster Innendurchmesser dem Außendurchmesser der Achsnabe entspricht und der aufgrund seiner Außenkontur und der Elastizität seines Materials in die Mittenbohrung zu Montagezwecken der Radfelge einschnappbar ist, und daß der Nabenführungsring eine zylindrische Buchse ist, auf deren äußere Oberfläche eine nutförmige, umlaufende Vertiefung ausgebildet ist, in die eine umlaufende Rippe auf der inneren Oberfläche der Mittenbohrung eingreift.

Derartige Nabenadapter, die insbesondere bei aus Leichtmetall bestehenden Radfelgen Verwendung finden, werden mittels einer Verschraubung und eines Zentrierelements an der Fahrzeugachsnabe bzw. Bremsscheibe oder Bremstrommel angebracht und dienen dazu, Radfelgen mit unterschiedlichen Einpreßtiefen an ein und demselben Fahrzeug verwenden zu können, wobei die Adapterscheibe einen einer 4- oder 5-Loch-Anbindung entsprechenden Lochkreisdurchmesser aufweist.

Durch verschieden starke Adapterscheiben ist somit eine Anpassung unterschiedlicher Radfelgen an die jeweilige Einbautiefe in Bezug auf die Achsnabenlänge des Fahrzeugs gegeben. In den Fällen, in denen jedoch die Radfelgen auf Achsnaben verwendet werden sollen, die sich nur oder auch hinsichtlich ihres Durchmessers unterscheiden, ist die Verwendung der Nabenadapter auch noch vom Durchmesser ihrer Mittenbohrung abhängig, was bedeutete, daß verschiedene Nabenadaptersätze hergestellt bzw. bevorratet werden müssen, die sich sowohl bezüglich ihrer Stärke als auch ihres Mittenbohrungsdurchmessers unterscheiden.

Aus der EP-A 0 703 100 ist ein gattungsgemäßer scheibenförmiger Nabenadapter bekannt, dessen Nabenführungsring jedoch eine glatte innere Oberfläche aufweist, deren Paßgenauigkeit im Hinblick auf eine präzisen Sitz auf der Radachse, auf die der Führungsring bei der Montage des Rades praktisch spielfrei aufgeschoben werden muß, bei der Anfertigung des Führungsrings einen erheblichen qualitativen und meßtechnischen Aufwand erfordert, weil er unter anderem auch die unvermeidbar im Kunststoffmaterial auftretenden Schrumpfspannungen zu berücksichtigen hat.

Die Nabenführungsfläche des Nabenführungsrings soll nach dem Spritzgießen andererseits auch nicht eine mechanische Nachbearbeitung erfordern, um der gewünschten Paßgenauigkeit gerecht zu werden.

Aus der US-A-5 455 628 ist darüber hinaus ein Abstandsring zur Verhinderung von Korrosion an Magnesiumfelgen bekannt, der mit einem Abstandsring der Radnabe zusammenwirkt, jedoch keine Adapterscheibe für die Radnabe bildet.

Die Aufgabe der Erfindung besteht deshalb darin, den an sich bekannten Nabenführungsring so zu gestalten, daß er bei seiner Zusammenwirkung mit verschieden starken Adapterscheiben zur Anpassung an unterschiedliche Radfelgen die verlangte Paßgenauigkeit in Bezug auf die Radachse mit einfacheren Mitteln bietet, die einen geringeren Herstellungsaufwand erfordern.

Dies wird erfindungsgemäß dadurch erreicht, daß auf der inneren Oberfläche des Nabenführungsrings eine umlaufende Rippe ausgebildet ist, deren Breite maximal halb so groß ist wie die Breite des Nabenführungsrings, wobei die Rippe von einer in Richtung der Achsnabe konisch verlaufenden Innenwand begrenzt ist.

Die umlaufende Rippe auf der inneren Oberfläche des Nabenführungsrings ermöglicht einem paßgenauen Sitz auf der Radachse, der durch Aufschieben des Führungsrings auf die Achse dadurch erreichbar ist, daß die Rippe in gewissem Umfang Verformungen zugänglich ist.

Dieser Nabenführungsring hat sich in den in den Unteransprüchen gekennzeichneten Ausfiihrungsformen besonders bewährt.

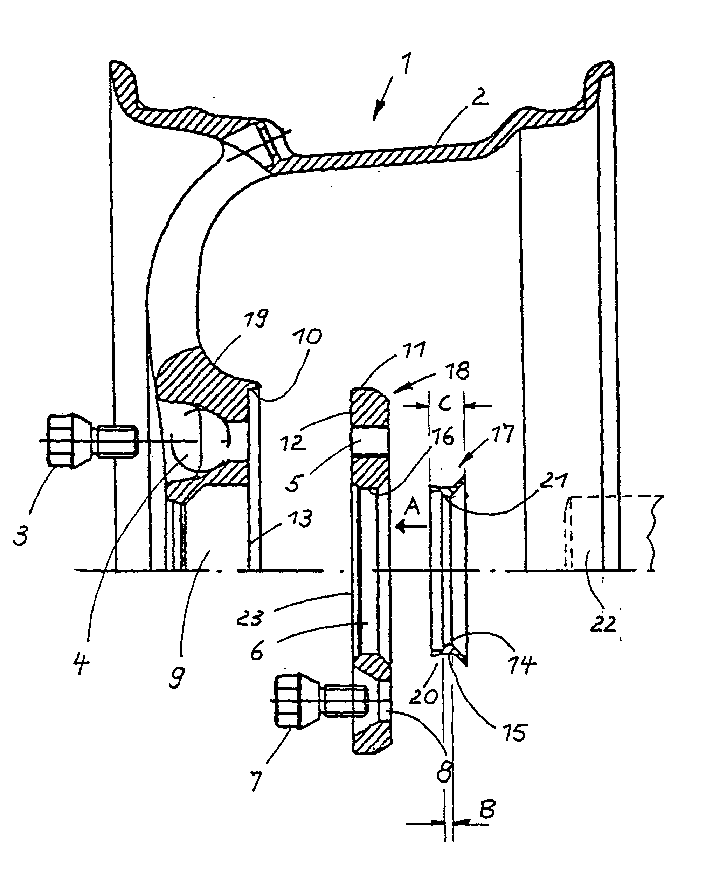

Die Erfindung wird nachfolgend anhand des in der Zeichnung dargestellten Ausführungsbeispiels erläutert, das im Querschnitt eine Radfelge mit einzubauendem Nabenadapter und einzubauendem Nabenführungsring zeigt.

Die in der Zeichnung gezeigte Radfelge 1 aus Leichtmetall weist das übliche Felgenbett 2 für einen Pkw-Reifen auf und ist auf ihrer Rückseite 19 mit einem 4- oder 5-Lochkreis 4 für die Aufnahme von Sechskantzentrierbundschrauben 3 versehen sowie mit einer Radfelgenbohrung 9, durch die sich die Fahrzeugachsnabe 22 im montierten Zustand der Radfelge hindurch erstreckt. Die Rückseite 19 weist außerdem einen zentrischen Sitz 10 für die Aufnahme des scheibenförmigen Nabenadapters 18 an dessen Außenumfang 11 auf.

Der Nabenadapter 18 wird mittels der auf einem Lochkreis liegenden Löcher 8, die von der Sechskantzentierbandschraube 7 durchgriffen werden, an der Bremsscheibe bzw. Bremstrommel befestigt und danach von den Zentrierbundschrauben 3 der Radfelge erfaßt, die in die Gewindelöcher 5 des Nabenadapters eingeschraubt werden, deren Lochkreis dem Radfelgenlochkreis entspricht. Auf diese Weise kommt die Vorderseite 23 des Nabenadapters 18 mit der Sitzfläche 13 auf der Rückseite 19 der Radfelge in dichte Anlage.

Zur Anpassung des Durchmessers der Mittenbohrung 6 des Nabenadapters bei der Montage der Radfelge an den Außendurchmesser der Achsnabe 22 wird in die Mittenbohrung ein zentrischer Nabenführungsring 17 eingesetzt, der sich aufgrund seiner Formgebung und seines Materials, aus dem er besteht, beispielsweise Kunststoff, in die Mittenbohrung einschnappen läßt.

Dieser Nabenführungsring 17 ist eine zylindrische Buchse, auf deren äußerer Oberfläche eine nutförmige, umlaufende Vertiefung 15 ausgebildet ist, in die eine umlaufende Rippe 16 auf der inneren Oberfläche der Mittenbohrung 6 eingreift. Auf der inneren Oberfläche des Nabenführungsrings 17 ist eine umlaufende Rippe 14 ausgebildet, deren Breite B maximal halb so groß ist wie die Breite C des Nabenführungsrings und die von einer in Richtung zur Achsnabe 22 konisch verlaufenden Innenwand 21 begrenzt ist.

Die Konstruktion des Nabenführungsrings gewährleistet nicht nur einen festen Sitz in der Mittenbohrung 6 des Nabenadapters, sondern auch eine präzise zentrische Ausrichtung des mit der Radfelge verschraubten Nabenadapters 18 bei der Montage der Radfelge auf der Achsnabe 22. Hierzu ist zweckmäßigerweise die Breite des Nabenführungsrings 17 so gewählt, daß sie der Tiefe der Mittenbohrung 6 des Nabenadapters entspricht. Beim Aufsetzen der Radfelge auf die Radnabe wird die durch den Nabenführungsring erfolgte Zentrierung des Rades selbst dann nicht aufgehoben, wenn das Rad mehrfach auf- und abmontiert wird, wobei der Nabenführungsring entsprechend auf die Nabe aufgeschoben oder von ihr abgezogen wird.

In diesem Zusammenhang hat sich auch eine Ausbildung bewährt, obgleich diese in der Zeichnung nicht dargestellt ist, bei der die Mittenbohrung 6 des Nabenadapters 18 eine Ringnut aufweist, in die eine auf der Außenfläche des Nabenadapters 17 ausgebildete, umlaufende Rippe eingreift.

Der Nabenführungsring 17 ist dadurch leicht bezüglich seiner Abmessungen sowohl an die Mittenbohrung als auch an die Achsnabe anpaßbar, daß er durch einen entsprechend bemessenen Ringkörper ersetzt wird.

Außerdem ließe sich die Anpaßbarkeit des Nabenführungsrings an Abmessung und Form der Mittenbohrung 6 des Nabenadapters 18 und der Achsnabe 22 auch dadurch erreichen, obgleich dies in der Zeichnung nicht dargestellt ist, daß der Ring aus mehreren Einzelringen zusammengesetzt wird.

## Patentansprüche

1. Scheibenförmiger Nabenadapter für einen Lochkreis zur Aufnahme von Radbefestigungsschrauben aufweisenden Radfelgen von Straßenfahrzeugen, der einerseits in einer Ausnehmung der Radfelge formschlüssig und zentrisch und andererseits mit seiner Mittenbohrung auf der Achsnabe des Fahrzeugs zentrisch anordbar ist, um das Fahrzeug an gewünschte Spurweiten und Einpresstiefen der Radfelgen anzupassen, wobei die Mittenbohrung (6) des Nabenadapters (18) einen zentrischen Nabenführungsring (17) aufweist, dessen kleinster Innendurchmesser dem Außendurchmesser der Achsnabe entspricht und der aufgrund seiner Außenkontur (15) und der Elastizität seines Materials in die Mittenbohrung (6) zu Montagezwecken der Radfelge einschnappbar ist, und daß der Nabenführungsring (17) eine zylindrische Buchse ist, auf deren äußere Oberfläche eine nutförmige, umlaufende Vertiefung ausgebildet ist, in die eine umlaufende Rippe (16) auf der inneren Oberfläche der Mittenbohrung (6) eingreift,
**dadurch gekennzeichnet, daß** auf der inneren Oberfläche des Nabenführungsrings (17) eine umlaufende Rippe (14) ausgebildet ist, deren Breite (B) maximal halb so groß ist wie die Breite (C) des Nabenführungsrings, wobei die Rippe (14) von einer in Richtung der Achsnabe (22) konisch verlaufenden Innenwand (21) begrenzt ist.

2. Nabenadapter nach Anspruch 1, **dadurch gekennzeichnet, dass** die Breite des Nabenführungsrings (17) der Tiefe der Mittenbohrung (6) des Nabenadapters entspricht.

3. Nabenadapter nach Anspruch 1 oder 2, **dadurch gekennzeichnet, dass** der Nabenführungsring (17) seinen Abmessungen nach sowohl an die Mittenbohrung (6) als auch die Achsnabe anpassbar ist.

4. Nabenadapter nach einem der Ansprüche 1 - 3, **dadurch gekennzeichnet, dass** die Anpassbarkeit des Nabenführungsrings an Abmessung und Form der Mittenbohrung (6) des Nabenadapters 818) und die Achsnabe dadurch erreicht wird, dass der Ring aus mehreren Einzelringen zusammengesetzt ist.

5. Nabenadapter nach einem der Ansprüche 1 - 4, **dadurch gekennzeichnet, dass** der Nabenführungsring aus Kunststoffmaterial besteht.

6. Nabenadapter nach einem der Ansprüche 1 - 5, **dadurch gekennzeichnet, dass** der Adapter für eine Vielzahl Nabenführungsringe verwendbar ist, die sich untereinander dadurch unterscheiden, dass ihre kleinsten Innendurchmesser unterschiedlich groß sind.

7. Nabenadapter nach einem der Ansprüche 1 - 6, **dadurch gekennzeichnet, dass** der Adapter aus glasfaserverstärktem Polyamid besteht.

## Claims

1. Disc-like hub adapter for a circuit of holes to receive wheel fixing screws for wheel rims of road vehicles, which adapter may be placed on the one hand into a recess configurationally and concentrically adapted to the wheel rim and on the other hand with its central bore concentrically on the axle hub of the vehicle in order to adapt the vehicle to the requested track widths and press in depths of the wheel rim, wherein the central bore (6) of the hub adapter (18) is provided with a concentrical hub leading ring (17) the smallest inner diameter of which corresponds to the outer diameter of the axle hub and which can be snapped into the central bore (6) because of its outer configuration (15) and the elasticity of its material on mounting the hub rim and wherein the hub leading ring (17) is a cylindrical bushing on the outer surface of which a groove-like circumferential recess is formed which is engaged by a circumferential rip (16) on the inner surface of the central bore (6), **characterized in that** on the inner surface of the hub leading ring (17) a circumferentially extending rib (14) is provided, the width (B) of which is at maximum half as wide as the width (C) of the hub leading ring, wherein the rib (14) is defined by an inner wall (21) extending conically in the direction of the axle hub (22).

2. Hub adapter according to claim 1, **characterised in that** the width of the hub leading ring (17) corresponds to the depth of the central bore (6) of the hub adapter.

3. Hub adapter according to one of the claim 1 or 2, **characterised in that** the hub leading ring (17) can be adapted with respect to its dimensions to the central bore (6) as well as to the axle hub.

4. Hub adapter according to one of the claims 1-3, **characterised in that** the adaptation of the hub leading ring to the dimension and configuration of the central bore (6) of the hub adapter (18) and the axle hub is made possible because of the fact that the ring consists of several single rings.

5. Hub adapter according to one of the claims 1-4, **characterised in that** the hub leading ring consists of plastic material.

6. Hub adapter according to one of the claims 1-5, **characterised in that** the adapter can be used for a multiplicity of hub leading rings differing from one another by the fact that their smallest inner diameters are different in size.

7. Hub adapter according to one of the claims 1-6, **characterised in that** the adapter consists of fibre class strengthened polyamid.

## Revendications

1. Adaptateur de moyeu en forme de disque pour un orifice circulaire destiné à recevoir des jantes de véhicules routiers présentant des vis de fixation de roue, qui peut être placé d'une part en engagement positif et de manière centrée dans un évidement de la jante et d'autre part avec son perçage central sur le moyeu d'axe du véhicule, afin d'adapter le véhicule à des écartements de roues et profondeurs d'insertion de jante souhaités, le perçage central (6) de l'adaptateur de moyeu (18) présentant une bague de guidage de moyeu centrée (17) dont le plus petit diamètre intérieur correspond au diamètre extérieur du moyeu d'axe et qui, compte tenu de son contour extérieur (15) et de l'élasticité de son matériau, peut être encliquetée dans le perçage central (6) à des fins de montage de la jante, et dans lequel la bague de guidage de moyeu (17) est une douille cylindrique sur la surface extérieure de laquelle est formé un renfoncement périphérique en forme de rainure, dans lequel s'engage une nervure périphérique (16) formée sur la surface intérieure du perçage central (6), **caractérisé en ce que** sur la surface intérieure de la bague de guidage de moyeu (17) est formée une nervure périphérique (14) dont la largeur (B) est au maximum à moitié aussi grande que la largeur (C) de la bague de guidage de moyeu, la nervure (14) étant délimitée par une paroi intérieure (21) s'étendant de manière conique en direction du moyeu d'axe (22).

2. Adaptateur de moyeu selon la revendication 1, **caractérisé en ce que** la largeur de la bague de guidage de moyeu (17) correspond à la profondeur du perçage central (6) de l'adaptateur de moyeu.

3. Adaptateur de moyeu selon la revendication 1 ou 2, **caractérisé en ce que**, du fait de ses dimensions, la bague de guidage de moyeu (17) peut être adaptée aussi bien sur le perçage central (6) que sur le moyeu d'axe.

4. Adaptateur de moyeu selon l'une des revendications 1 à 3, **caractérisé en ce que** l'adaptabilité de la bague de guidage de moyeu aux dimensions et à la forme du perçage central (6) de l'adaptateur de moyeu (18) et au moyeu d'axe est obtenue par le fait que la bague est composée de plusieurs anneaux distincts.

5. Adaptateur de moyeu selon l'une des revendications 1 à 4, **caractérisé en ce que** la bague de guidage de moyeu est composé d'un matériau synthétique.

6. Adaptateur de moyeu selon l'une des revendications 1 à 5, **caractérisé en ce que** l'adaptateur est utilisable pour une pluralité de bagues de guidage de moyeu, qui diffèrent entre elles par le fait que leurs plus petits diamètres intérieurs sont différents.

7. Adaptateur de moyeu selon l'une des revendications 1 à 6, **caractérisé en ce que** l'adaptateur est composé de polyamide renforcé de fibres de verre.
